# EUROPEAN PATENT APPLICATION

(11) **EP 4 201 630 A1**
(43) Date of publication of application: **28.06.2023**
(21) Application number: 22212722.7
(22) Date of filing: 12.12.2022
(51) Int. Cl.: B29C 33/44, B29C 45/40

(54) **MOLD FOR INJECTION MOLDING OF PLASTIC MATERIAL WITH EJECTING SYSTEM**

(30) Priority: 27.12.2021 IT 202100032714
(71) Applicant: Ivars S.p.A., 25078 Vestone (BS) (IT)
(72) Inventor: EBENESTELLI, Carlo, 25128 Vestone (BS) (IT)
(74) Representative: Biesse S.r.l.

(57) **Abstract**

The present invention concerns a mold (1) for injection molding of plastic material, comprising: a cavity (2) and a core (3), wherein at least the core is movable with respect to the cavity, and which define, with the mold closed, a hollow shape corresponding to a piece to be molded (4); an inlet channel (5) arranged at the cavity for injecting melted plastic material into the mold; an ejecting system, on the side of the core (3), comprising an ejector element (8) which is movable and which is arranged aligned with the inlet channel (5); wherein the ejecting system comprises a movable shearing element (9) arranged aligned with the inlet channel (5), wherein the ejector element (8) and the shearing element (9) are coaxial to one another.

## Description

### Field of the invention

In its most general aspect, the present invention concerns the technical field of molds for injection molding of plastic material.

In particular, the invention concerns a mold of the aforesaid type provided with an ejecting system for ejecting the molded piece, and a process of injection molding plastic material preferably using the aforesaid mold.

More particularly, the invention concerns a mold and a process of the type considered above for producing bases for seats, for example for offices.

### Background art

As known, in the field of home and office furnishings, the known art provides chairs comprising a seat and a pedestal combined to one another, wherein the seat is generally movable with respect to the pedestal.

In particular, the pedestal, also known as base, can be made of metal or plastic material and can comprise 4 or 5 so-named spokes.

In case of a base made of plastic material, the latter is molded into the desired shape through an injection molding process which provides to directly inject the plastic material into a portion of the mold which corresponds to a central hollow cone of the respective molded base, also identified as seat.

The aforesaid injection, which occurs precisely at the minimum lower diameter of the aforesaid central cone, contemporaneously ensures a very high flow rate of plastic material and a balanced flow on all the spokes of the base, the injection being performed along the entire extent of the aforesaid diameter.

Although advantageous, the process described above is not however without drawbacks.

In fact, a body is formed following the aforesaid injection, which body is commonly referred to as sprue in the technical field and which body remains attached to the same base for a seat once the molded base has been ejected from the mold. Consequently, the sprue must be removed in a successive step.

Generally, according to the known art, the sprues are removed from the bases for seat by manual drilling.

Disadvantageously, the manual drilling must be performed by a prescribed operator for each molded base, with a consequent increase in the production costs since the presence of the operator is always required on board of the press comprising the mold.

Moreover, the constant presence of an operator on board of the press can disadvantageously determine safety problems at work, also, but not only, because the removal of the sprue by drilling can itself cause accidents at work.

### Summary of the invention

The technical problem underlying the present invention was to provide a process of injection molding plastic materials for molding bases for seat, having features such as to overcome one or more of the drawbacks mentioned above with reference to the known art.

According to the invention, the aforesaid problem is solved by a mold for injection molding of plastic materials provided with an ejecting system which automatically removes from a molded piece, and thus from a base for a seat, a so-named sprue, which is formed while using the mold, particularly after the plastic material used for molding has cooled.

In practice the aforesaid mold comprises a mechanical ejecting system which, while ejecting the piece from the mold, automatically shears the sprue, thus separating it from the finished piece.

Advantageously, the aforesaid mold allows to improve the production of the molded pieces, thus of the bases for seat made of plastic material, both with regard to production costs and with regard to safety at work.

The production of bases for seat made of plastic material by means of the mold according to the present invention is indeed faster, safer and less costly with respect to that which is provided in the known art.

According to the invention, the aforesaid mold comprises:
a cavity and a core, wherein at least the core is movable with respect to the cavity, and which define, with the mold closed, a hollow shape corresponding to a piece to be molded;
at least one inlet channel arranged at the aforesaid cavity for injecting melted plastic material into the mold;
an ejecting system, on the side of the aforesaid core, comprising at least one ejector element, wherein the aforesaid at least one ejector element is movable and is arranged aligned with the aforesaid at least one inlet channel;
which is characterized in that
the aforesaid ejecting system comprises at least one shearing element, wherein the aforesaid at least one shearing element is movable and is arranged aligned with the aforesaid at least one inlet channel, the aforesaid at least one ejector element and the aforesaid at least one shearing element being coaxial to one another.

In practice, according to the invention, the movement of the aforesaid at least one shearing element allows to automatically detach the aforesaid sprue from the molded piece, while the movement of the aforesaid at least one ejector element allows to remove, i.e. eject, the molded piece from the mold and, in particular, from the aforesaid core.

Preferably, the aforesaid at least one shearing element has a substantially cylindrical or at least partly cylindrical or conical shape, more preferably a cylindrical or at least partly cylindrical or conical solid shape.

Preferably, the aforesaid at least one ejector element has a substantially cylindrical shape, more preferably a cylindrical shape at least partly hollow.

Preferably, the aforesaid at least one shearing element is arranged at least partly inside the aforesaid at least one ejector element.

Preferably, while shearing the sprue and ejecting the molded piece, the aforesaid at least one shearing element can be moved, i.e. be pushed by prescribed movement means, over a first length to which no movement of the aforesaid at least one ejector element corresponds, and thereafter over a second length to which a respective movement of the aforesaid at least one ejector element corresponds.

Thus, according to the invention, the aforesaid a least one shearing element is adapted to be combined with movement means of the aforesaid type and active thereon, or the aforesaid mold can comprise movement means of the aforesaid type combined with the aforesaid at least one shearing element, which are preferably integral therewith.

Thus, according to the above, the aforesaid movement means preferably move the aforesaid at least one shearing element and the movement of the at least one shearing element in turn determines the movement of the aforesaid at least one ejector element successively to a movement equal to the aforesaid first length and during a movement equal to the aforesaid second length.

In practice, the aforesaid ejecting system is characterized by a so-named "dual stroke" which involves a first step, in which only the shearing element is moved, and a second step, in which both the shearing element and the ejector element are moved together, the latter thanks to the movement of the at least one shearing element.

Preferably, the aforesaid mold comprises a cone-shaped element inside which the aforesaid at least one inlet channel is formed, wherein said at least one cone-shaped element is preferably provided with a cooling circuit.

Preferably, the aforesaid mold comprises at least one sleeve or hub arranged at the aforesaid core, wherein the aforesaid at least one hub is substantially coaxial with the aforesaid at least one inlet channel and wherein the aforesaid at least one hub is more preferably provided with undercuts.

Preferably, the aforesaid hollow shape corresponds to the shape of a base for seat comprising 4 or 5 spokes.

Preferably, the aforesaid mold allows to mold a plurality of pieces, more preferably 2 or 3, the aforesaid mold preferably comprising two or more inlet channels of the aforesaid type, two or more ejecting systems of the aforesaid type, two or more cone-shaped elements of the aforesaid type, two or more sleeves or hubs of the aforesaid type.

According to the invention, the aforesaid ejecting system preferably comprises:
at least one first movable support to which the aforesaid at least one ejector element is integral;
at least one second movable support to which the aforesaid at least one shearing element is integral;
wherein the aforesaid at least one first support is provided with a through hole engaged by the aforesaid at least one shearing element.

According to an embodiment of the invention, the aforesaid at least one second support is arranged at a preset distance from the aforesaid at least one first support, on a side of the latter opposite the side facing the aforesaid at least one inlet channel, wherein the aforesaid at least one first support and the aforesaid at least one second support are preferably plate-shaped elements.

According to a further embodiment, the aforesaid at least one second support is partially arranged inside the aforesaid at least one first support, on a side of the latter opposite the side facing the aforesaid at least one inlet channel, wherein the aforesaid at least one second support is at a preset distance from the aforesaid at least one ejector element, wherein the aforesaid at least one first support is preferably plate-shaped, the aforesaid at least one second support is a bushing having a seat engaged by the aforesaid at least one shearing element, and wherein the aforesaid ejecting system comprises an elastic element, for example a spring, housed inside the aforesaid seat and interposed between the aforesaid bushing and the aforesaid at least one shearing element and thus interposed between an inner wall of the aforesaid bushing which defines the aforesaid seat and the aforesaid at least one shearing element, wherein the aforesaid elastic element advantageously allows the aforesaid "dual stroke" and the return of the shearing element to its initial position.

Thus, according to the above, the aforesaid mold can comprise movement means to which the aforesaid second support element can be integral, or the aforesaid second support element can be adapted to be combined and preferably constrained integrally to movement means of the aforesaid type and which, in any case, are arranged on the side of the aforesaid second support element opposite the side where the aforesaid at least one shearing element extends.

According to the invention, the aforesaid problem is further solved by a process of injection molding plastic material, particularly for molding bases for seat, for example for offices, comprising, in sequence:
an injecting step in which melted plastic material is injected into a mold;
a forming step in which the melted plastic material is shaped;
a cooling step in which the plastic material cools, thus forming a molded piece and a sprue integral with the aforesaid molded piece;
an opening step for opening the aforesaid mold;
an ejecting step wherein the aforesaid molded piece is ejected from the mold,
which is characterized in that
the aforesaid ejecting step comprises a first sub-step, in which the aforesaid sprue is automatically sheared and detached from the aforesaid molded piece by means of at least one movable shearing element, and a second sub-step, in which the aforesaid molded piece is ejected from the mold by means of at least one movable ejector element, wherein the aforesaid at least one shearing element and the aforesaid at least one ejector element are arranged aligned with the aforesaid sprue, the aforesaid at least one ejector element and the aforesaid at least one shearing element being coaxial to one another.

Preferably, in the aforesaid process and preferably in the aforesaid mold, same movement means allow the movement of both the aforesaid at least one shearing element and the aforesaid at least one ejector element, and the same more preferably drive the aforesaid at least one shearing element and then also allow, through the movement of the latter, the movement of the aforesaid at least one ejector element.

According to the invention, the aforesaid process is preferably, but not exclusively, implemented with the aforesaid mold.

### Brief description of the figures

Further characteristics and advantages of the invention will become clearer in the review of the following detailed description of a preferred, although not exclusive, embodiment illustrated by way of example and without limitations with the aid of the accompanying drawings, in which:
- figure 1 schematically shows a sectional view of a portion of a mold for the injection molding of plastic material to make a base for a seat, for example for offices, during a step of use;
- figure 2 shows the mold of figure 1 during a step of use following that of figure 1;
- figure 3 shows the mold of figure 1 during a step of use following that of figure 2;
- figure 4 shows the mold of figure 1 during a step of use following that of figure 3;
- figure 5 schematically shows the mold of figure 1 according to an embodiment variant of the invention.

### Detailed description of the invention

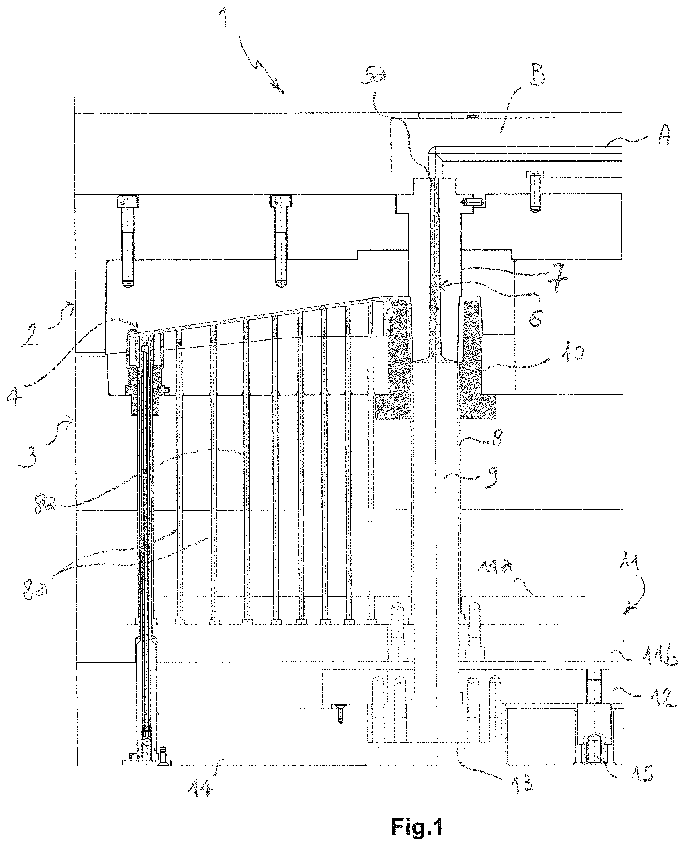

With reference to figures 1-4, a mold for injection molding plastic material to make a base for a seat, for example for offices, according to an embodiment of the present invention is denoted by **1.**

The mold **1,** which is only partially shown in the examples of the aforesaid figures, substantially comprises a cavity **2** and a core **3,** wherein the core constitutes the movable part of the mold for closing and opening it, the possibility of providing, alternatively or in addition to the above, the cavity movable not however being excluded.

The cavity **2** and the core **3** define, with the mold closed, at least one hollow shape corresponding to a piece to be molded, i.e. a molded piece denoted by **4,** in the specific case corresponding to the aforesaid base for a seat comprising a plurality of spokes and which is only partially shown in the aforesaid figures. It should be mentioned that a mold according to the present invention can allow to contemporaneously mold several pieces, for example two or three, by providing several hollow shapes of the aforesaid type, the description hereunder referring to a single hollow shape.

The mold **1** is provided with an inlet channel **5** arranged at the cavity **2** for injecting the melted plastic material, the possibility to provide, as set forth above, more than one inlet channel of the aforesaid type for the contemporaneous molding of several pieces, not however being excluded.

In detail, the inlet channel **5** is provided with a mouth **5a** which corresponds to the inlet point of the melted plastic material into the mold **1,** which melted plastic material is fed by a duct **A** of a so-named hot runner **B.**

In particular, after injecting the melted plastic material into the mold **1,** the same melted plastic material is distributed into the hollow shape of the mold, thus filling it and taking the respective desired shape.

In any case, in order to be able to eject the molded piece **4** from the mold, the plastic material constituting it must be cooled and, after precisely as a result of the cooling of the plastic material, a so-named sprue **6** is also formed.

Specifically, the inlet point of the melted plastic material into the mold **1** is the point at which the sprue **6** starts, since the detachment of the cooled and thus solid sprue **6** from the melted plastic material still present in the duct **A** of the hot runner **B** occurs at the mouth **5a.**

The sprue **6** thus extends from the mouth **5a** along the entire extent of the inlet channel **5** and thus has an elongated body of the stem type denoted by **6a,** and a substantially disc-shaped end portion denoted by **6b,** integral with the elongated body **6a** and which is formed at the end of the inlet channel **5** opposite the mouth **5a.**

It should be highlighted that, according to the examples of the figures, the mold **1** comprises a cone-shaped element **7** inside which the inlet channel **5** is formed, and thus also the mouth **5a,** which inlet channel also has a cone-shaped extent, in particular flared towards the core **3.**

The cone-shaped element **7** is advantageously made of hardened steel and facilitates the creation of a conical seat for inserting a gas pump into the molded piece, and thus, in the specific case, into the base for a seat, for moving the seat with respect to the base.

Moreover, it should be mentioned that the cone-shaped element **7** is preferably provided with a cooling circuit to facilitate the solidification of the sprue and which cooling circuit is not illustrated in the examples of the figures.

According to the above, the sprue **6** is thus integral with the molded piece **4** and is in particular constrained to the molded piece **4** at the disc-shaped end portion **6b.**

The example of figure 1 in fact shows the molded piece **4** joined to the sprue **6** following the injection of the melted plastic material into the mold and its cooling, as set forth above.

Thus, at the end of the real molding step and the respective cooling, the mold **1** is opened by moving the core **3** away from the cavity **2.**

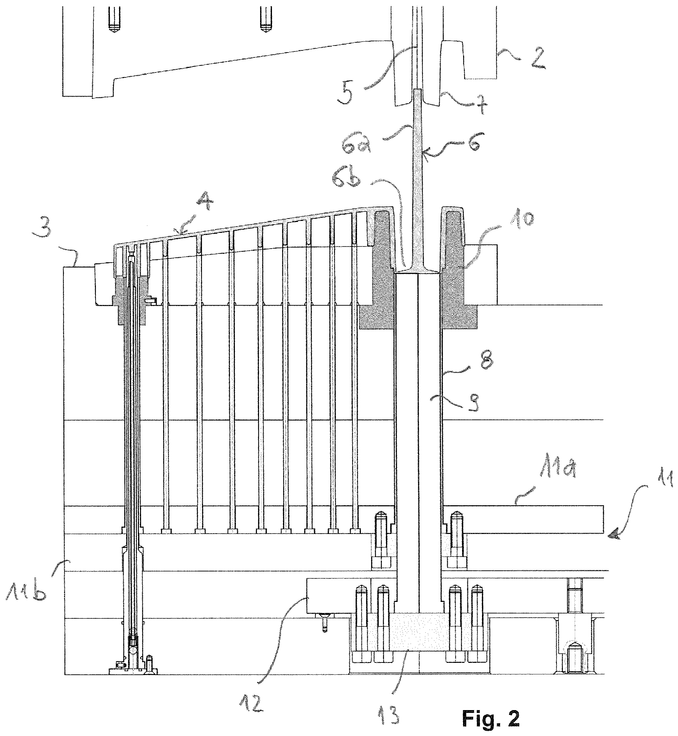

According to the examples of the aforesaid figures, following the opening of the mold, the molded and now cooled piece **4** stays on the movable portion of the mold, i.e. stays combined with the core **3** in the specific case, as shown in particular in figure 2 in which it is possible to note that, in practice, the sprue **6** slips off from the inlet channel **5** of the cone-shaped element **7,** thus forming a single body with the molded piece **4.**

The mold **1** is provided with an ejecting system arranged on the side of the core **3,** for ejecting the molded piece **4** from the mold **1** and according to the invention for automatically removing the sprue **6** from the molded piece **4.**

In detail, the aforesaid ejecting system comprises at least one ejector element denoted by **8,** which is movable and is arranged aligned with the inlet channel **5.** According to the example of the aforesaid figures, the aforesaid ejecting system further comprises, in addition to the ejector element **8** which is in practice a main or central ejector element, a plurality of further ejector elements denoted by **8a** and also identified as secondary or peripheral ejector elements.

Moreover, according to the invention, the aforesaid ejecting system further comprises a shearing element **9** which is movable and which is arranged aligned with the inlet channel **5.** It should be remembered that, according to the invention, several main ejector elements and several shearing elements of the aforesaid type can further be provided, in particular whenever two or more inlet channels are present for the contemporaneous molding of several bases for seats.

Moreover, it should be mentioned that, according to the present invention, the ejector element **8** and the shearing element **9** are coaxial to one another.

In practice, the aforesaid ejecting system, which is driven by prescribed movement means such as a piston, for example an hydraulic one as will become clearer hereunder, automatically removes the sprue **6** from the molded piece **4** through the shearing element **9** and further allows to eject the molded piece **4** from the mold **1** already detached from the sprue **6** through the ejector element **8** with the aid of the further ejector elements **8a.**

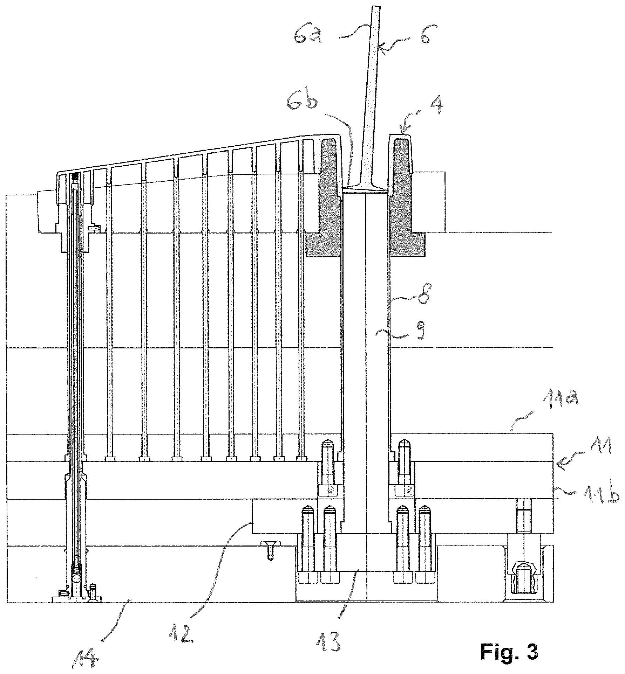

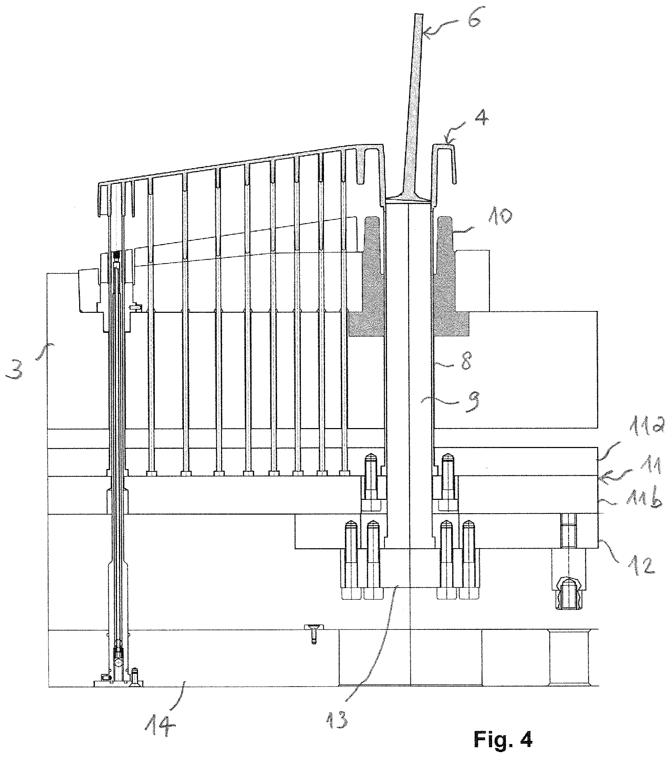

The step of shearing the sprue **6,** i.e. the step of detaching the sprue **6** from the molded body **4,** is illustrated in figure 3, while figure 4 shows the step of ejecting the molded body **4,** which is no longer constrained to the sprue **6,** from the mold **1.**

In particular, still as far as the aforesaid ejecting system is concerned, it should be mentioned that, according to the aforesaid figures, the shearing element **9** preferably has a substantially cylindrical shape and more preferably the aforesaid shape corresponds to a solid cylinder, and that the ejector element **8** also preferably has a substantially cylindrical shape, in this case more preferably a shape corresponding to a hollow cylinder.

The ejector element **8,** also denoted as ejector sleeve in the technical field of reference, as well as the further ejector elements **8a,** are preferably made of nitrided steel.

Instead, the shearing element **9** is preferably made of hardened and particularly hard steel since, as mentioned, it is intended to shear the connection of the sprue **6** to the molded body **4** so that to separate it therefrom.

Moreover, according to the examples of the aforesaid figures and according to the present invention, it should be added that the shearing element **9** is preferably arranged at least partly inside the ejector element **8.**

Moreover, it should be noted that, according to the examples of the figures, the mold **1** comprises a sleeve or hub denoted by **10** and arranged inside the core **3,** which sleeve or hub is substantially coaxial with the inlet channel **5** arranged inside the cavity **2** and thus coaxial with the shearing element **9** and with the ejector element **8,** on which undercuts are preferably formed.

Advantageously, the hub **10** is made of hardened steel and creates gaps around the central conical seat of the molded piece **4,** whereas the undercuts, not shown in the examples of the figures, facilitate the shearing of the sprue **6** allowing the molded piece **4** to stay more stable in the core **3** while the shearing element **9** shears the sprue **6.**

In detail, as far as the movement of the aforesaid ejecting system is concerned, and thus of the shearing element **9** and of the ejector element **8,** it should be mentioned that, according to the examples of the aforesaid figures, they are moved by the same movement means, in the sense that the shearing element **9** is moved and in particular pushed by the aforesaid movement means over a first length, such as to come into contact with the sprue **6** and thus detach it from the molded piece **4,** wherein no movement of the ejector element **8** corresponds to the aforesaid first length, thus the shearing element **9,** still pushed by the aforesaid movement means, is moved over a second length to which a similar and respective movement of the ejector element **8** and of the further ejector elements **8a** corresponds and which determines the ejection of the molded piece **4** from the mold.

In practice, according to the examples of the aforesaid figures, the movement of the ejector element **8** is successive to that of the shearing element **9,** the aforesaid ejecting system providing a so-named "dual stroke".

In detail, for the movement of the aforesaid ejecting system according to the example of the aforesaid figures, the mold **1** comprises a first movable support **11** to which the ejector element **8** and the further ejector elements **8a** are integral, and a second support **12,** also movable, to which the shearing element **9** is integral, wherein the second support **12** is arranged at a preset distance from the first support **11,** on a side of the latter opposite the side facing the inlet channel **5.**

Moreover, the first support **11** is provided with a through hole engaged by the shearing element **9,** while the second support **12** can be integral or can be adapted to possibly be combined integrally with the aforesaid movement means which are arranged on the side of the second support **12** opposite the side where the shearing element **9** is, the movement means being schematized in the examples of the figures with the number of reference **13.**

From a purely constructive point of view, it should be mentioned that the first support **11** and the second support **12** are preferably plate-shaped and that, in detail, the first support **11** comprises an upper plate **11a** and a lower plate **11b** integral to one another and preferably made of steel, which plates are also denoted as "upper plate of the ejector plate" and respectively as "lower plate of the ejector plate" in the technical field of reference, the so-named "ejector plate" further comprising the ejector element **8** and the further ejector elements **8a.** Such plates with the respective ejector elements substantially constitute a traditional ejecting system for ejecting the molded piece from the mold.

The second support **12,** which can also be defined as "plate of the shearing plate," is also preferably made of steel and is, as illustrated in the examples of the aforesaid figures, integral with the movement means **13.** The second support **12,** when ejecting the molded piece **4,** moves before the first support **11,** thus allowing the automatic shearing of the sprue **6.**

According to the above, the second support **12** and the ejector element **9** form what is known as the "ejector plate" in the technical field of reference.

In detail, when the ejection of the molded piece from the press housing the mold is operated, the second support is the first to move and to in particular move forward, since the movement means act on the second support (technically, it is a matter of ejection connections fastened on the support or plate of the shearing plate). Moreover, since only the shearing element is fastened to and moves with the second support, the bottom of the sprue is precisely the only point at which a sort of ejection is performed. Thus, the sprue breaks, thus separating from the molded piece, through this "ejecting force" deriving from a first stroke of the shearing element.

The second support then continues to move forward until meeting the first support and in particular the lower plate of the ejector plate, after which, the first support and the second support (and both the lower and upper plates of the first support) move forward together, always pushed by the aforesaid movement means of the press. This way, the molded piece is ejected from the mold through the ejector elements.

It should be added that, according to the examples of the aforesaid figures, the mold **1** further comprises a third plate-shaped support **14** denoted also as "bottom core plate" and preferably made of steel, which support fastens and closes the entire movable part of the mold and thus the core **3.**

Finally, reference **15** denotes connections, in particular so-named "ejection connections", which substantially are threaded components made of steel that allow to fasten the aforesaid second support to the hydraulic movement system of the injection press, which in practice corresponds to the aforesaid movement means.

This way, an operator can control the ejection of the molded piece from the mold with the respective shearing of the sprue through a control panel provided aboard the press.

Thus, according to the above, the present invention further provides a process of injection molding plastic material, in particular for molding bases for seats, for example for offices, comprising, in sequence:
an injecting step in which melted plastic material is injected into a mold **1;**
a forming step in which the melted plastic material is shaped;
a cooling step in which the plastic material cools, thus forming a molded piece **4** and a sprue **6** integral with the molded piece **4;**
an opening step for opening the mold **1;**
an ejecting step wherein the molded piece **4** is ejected from the mold **1,**
which is characterized in that
the aforesaid ejecting step comprises a first sub-step, in which the sprue **6** is automatically sheared and detached from the molded piece **4** by means of a movable shearing element **9,** and a second sub-step, in which the aforesaid molded piece **4** is ejected from the mold **1** by means of a movable ejector element **8,** wherein the shearing element **9** and the ejector element **8** are arranged aligned with the sprue **6,** wherein the ejector element **8** and the shearing element **9** are coaxial to one another.

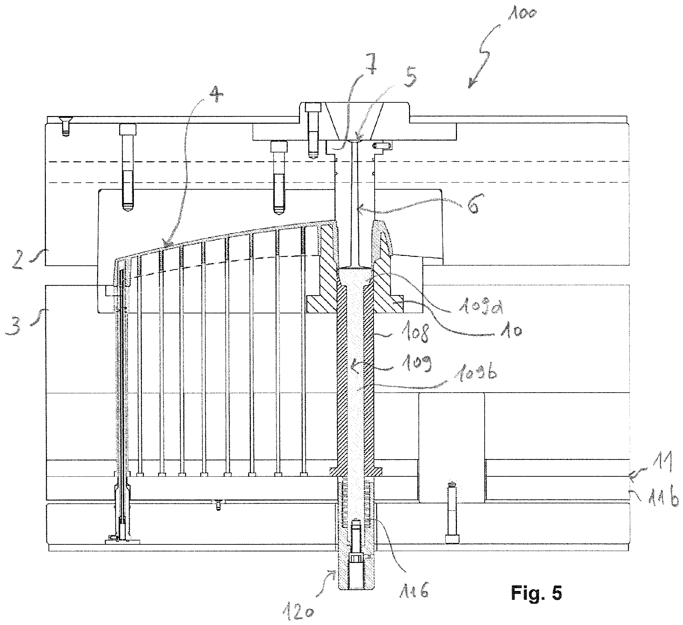

According to the invention, the aforesaid process is thus preferably, but not exclusively, implemented with the aforesaid mold or with an embodiment variant of the aforesaid mold, illustrated in the example of figure 5, in which portions structurally and functionally corresponding to those of the mold **1,** to whose description reference is to be made, keep the same numbers of reference as those of figures 1-4.

In particular, in the example of figure 5, a mold **100** particularly intended for molding a single piece, thus a single base for a seat, is illustrated, wherein the mold **1** is preferably used to mold several pieces at once, as previously set forth.

The mold **100** is essentially equal to the mold **1** except for the fact of providing, with respect to the latter, a different second support, in addition to the partially modified ejector and shearing elements.

In detail, the mold **100** comprises a second support **120** arranged partly inside the first support **11** on a side of the latter opposite the side facing the inlet channel **5,** thus arranged inside the lower plate **11b** of the first support **11,** wherein the second support **120** is at a preset distance from the ejector element denoted by reference **108,** wherein the first support **11** is thus preferably plate-shaped, whereas the second support **120** is shaped like a bush or bushing, for example made of steel, having a seat engaged by the shearing element, denoted by reference **109** in the example of figure 5.

Moreover, the ejecting system of the mold **100** comprises an elastic element, for example a spring, denoted by reference **116,** which element is housed inside the aforesaid seat and interposed between the aforesaid bush and the shearing element **109,** i.e. interposed between an inner wall of the aforesaid bush which defines the aforesaid seat and the shearing element **109.**

Advantageously, the elastic element **116,** which is preferably made of harmonic steel, allows a "dual stroke" of the ejecting system of the mold **100** and returning the shearing element **109** to its initial position.

In the back part, the elastic element **116** is provided with a thread for connecting to the movement means, for example for connecting to a press, for example hydraulic, on board of which the mold is mounted.

The ejection from the press of the molded piece can be controlled and, since the so-named central ejection connection is fastened to the aforesaid bush, the latter can initially move forward together with the only shearing element, and this movement allows the sprue to break before completing the ejection of the piece.

In practice, pushed by the hydraulic piston of the press, the aforesaid bush moves forward with the compression of the elastic element until meeting the lower plate of the first support, while once in abutment thereon, the first support and the second support move forward together, i.e. the upper and lower plates of the first support together with the bush constituting the second support. This way, the piece is ejected from the mold through the ejector elements.

In detail, as far as the aforesaid ejector and shearing elements are concerned, it should be briefly mentioned that the shearing element **109** comprises a head **109a** and an elongated body **109b,** wherein the head, which is protruding with respect to the elongated body, has a flared profile.

Consequently, the ejector element **108** is shaped to be matched with the shearing element **109** arranged therein.

Moreover, in the example of figure 5, the cavity **2** and the core **3** of the mold, the cone-shaped element **7,** the hub **10,** as well as the molded piece **4** and the sprue **6,** are also visible and depicted.

The advantages of the present invention, which have become clear during the above description, can be summarized by pointing out that a mold for the injection molding of plastic material that allows to improve the production of the molded pieces, thus in particular of the bases for seat made of plastic material, both with regard to production costs and with regard to safety at work, is provided. The production of bases for seats made of plastic material by means of the mold according to the present invention is indeed faster, safer and less costly than that which is provided in the known art. Moreover, it should be mentioned that also the aesthetics of the molded piece are not compromised, as could instead accidentally occur during a process of removing the sprue through manual drilling.

In order to meet contingent and specific requirements, several variations and modifications could be made by a field technician to the illustrated and described embodiments of the present invention, provided that all are included in the scope of protection of the invention as defined by the following.

## Claims

1. Mold (1, 100) for injection molding of plastic material, comprising:
a cavity (2) and a core (3), wherein at least the core is movable with respect to the cavity, and which define, with the mold closed, a hollow shape corresponding to a piece to be molded (4);
at least one inlet channel (5) arranged at said cavity (2) for injecting melted plastic material into said mold (1);
an ejecting system, on the side of said core (3), comprising at least one ejector element (8, 108), wherein said at least one ejector element (8, 108) is movable and is arranged aligned with said at least one inlet channel (5);
**characterized in that**
said ejecting system comprises at least one shearing element (9, 109), wherein said at least one shearing element (9, 109) is movable and is arranged aligned with said at least one inlet channel (5), said at least one ejector element (8, 108) and said at least one shearing element (9, 109) being coaxial to one another.

2. Mold according to claim 1, wherein said at least one shearing element (9, 109) has a substantially cylindrical or at least partly cylindrical or conical shape, preferably a cylindrical or at least partly cylindrical or conical solid shape.

3. Mold according to claim 1 or 2, wherein said at least one ejector element (8, 108) has a substantially cylindrical shape, more preferably a cylindrical shape at least partly hollow.

4. Mold according to any one of the preceding claims, wherein said at least one shearing element (9, 109) is arranged at least partly inside said at least one ejector element (8, 108).

5. Mold according to any one of the preceding claims, comprising a cone-shaped element (7) inside which said inlet channel (5) is formed, wherein said cone-shaped element (7) is preferably provided with a cooling circuit.

6. Mold according to any one of the preceding claims, comprising a hub (10) arranged at said core (3), wherein said hub (10) is substantially coaxial with said inlet channel (5) and wherein said hub (10) is preferably provided with undercuts.

7. Mold according to any one of the preceding claims, wherein said ejecting system comprises:
at least one first movable support (11) to which said at least one ejector element (8; 108) is integral;
a second movable support (12, 120), to which said at least one shearing element (9, 109) is integral;
wherein said at least one first support is provided with a through hole engaged by said at least one shearing element.

8. Mold according to claim 7, wherein said at least one second support (12) is arranged at a preset distance from said at least one first support (11), on a side of the latter opposite the side facing said at least one inlet channel (5), wherein said at least one first support and said at least one second support preferably are plate-shaped elements.

9. Mold according to claim 7, wherein said at least one second support (120) is partially arranged inside said at least one first support (11), on a side of the latter opposite the side facing said at least one inlet channel (5), wherein said at least one second support (120) is at a preset distance from said at least one ejector element (109), wherein said at least one first support (11) preferably is plate-shaped, said at least one second support (120) is a bush or bushing having a seat engaged by said at least one shearing element (109), and wherein said ejecting system comprises an elastic element (116) housed inside said seat and interposed between said bush or bushing and said at least one shearing element (10).

10. Mold according to claim 7, 8 or 9 comprising movement means (13) to which said second support (12) is integral, said movement means (13) being arranged on the side of said second support (12) opposite the side of said shearing element.

11. Mold according to any one of the preceding claims, wherein said hollow shape corresponds to the shape of a base for a seat, preferably a base for a seat comprising 4 or 5 spokes.

12. Process of injection molding plastic material, comprising, in sequence:
an injecting step in which melted plastic material is injected into a mold (1; 100);
a forming step in which the melted plastic material is shaped;
a cooling step in which the plastic material cools, thus forming a molded piece (4) and a sprue (6) integral with said molded piece (4);
an opening step for opening said mold (1; 100);
an ejecting step wherein said molded piece (4) is ejected from said mold (1; 100),
**characterized in that**
said ejecting step comprises a first sub-step, in which said sprue (6) is automatically sheared and detached from said molded piece (4) by means of at least one movable shearing element (9, 109), and a second sub-step, in which said molded piece (4) is ejected from said mold (1) by means of at least one movable ejector element (8, 108), wherein said at least one shearing element (9, 109) and said at least one ejector element (8, 108) are arranged aligned with said sprue (6), said at least one ejector element (8, 108) and said at least one shearing element (9, 109) being coaxial to one another.

13. Process according to claim 12, wherein same movement means (13) first drive said at least one shearing element (9) and then, through the movement of the latter, drive said at least one ejector element (8).
